# EUROPÄISCHE PATENTSCHRIFT

(11) **EP 2 609 153 B1**
(45) Veröffentlichungstag und Bekanntmachung des Hinweises auf die Patenterteilung: **02.03.2016**
(21) Anmeldenummer: 11752159.1
(22) Anmeldetag: 22.08.2011
(51) Int. Cl.: C08L 69/00

(54) **SCHLAGZÄHMODIFIZIERTE POLYESTER/POLYCARBONAT-ZUSAMMENSETZUNGEN MIT VERBESSERTER REIßDEHNUNG**
IMPACT-MODIFIED POLYESTER/POLYCARBONATE COMPOSITIONS HAVING IMPROVED ELONGATION AT RUPTURE
COMPOSITIONS DE POLYESTER/POLYCARBONATE À RÉSILIENCE MODIFIÉE PRÉSENTANT UNE ÉLONGATION À LA RUPTURE AMÉLIORÉE

(30) Priorität: 24.08.2010 DE 102010039712
(43) Veröffentlichungstag der Anmeldung: 03.07.2013
(73) Patentinhaber: Covestro Deutschland AG, 51373 Leverkusen (DE)
(72) Erfinder: FELDERMANN, Achim, 40597 Düsseldorf (DE); WENZ, Eckhard, 50931 Köln (DE)
(74) Vertreter: Levpat
(86) Internationale Anmeldenummer: PCT/EP2011/064367
(87) Internationale Veröffentlichungsnummer: WO 2012/025481

(56) Entgegenhaltungen:
- EP-A2- 0 247 465
- EP-A2- 0 594 021
- WO-A1-98/17725
- WO-A2-2007/087346
- JP-A- 8 012 864
- DATABASE WPI Week 200935 Thomson Scientific, London, GB; AN 2009-G08534 XP002661039, & KR 100 878 571 B1 (CHEIL IND INC) 15. Januar 2009 (2009-01-15)

## Beschreibung

Die vorliegende Erfindung betrifft schlagzähmodifizierte Polyester- / PolycarbonatZusammensetzungen, die eine verbesserte Reißdehnung in Verbindung mit einer exzellenten multiaxialen Zähigkeit und geringer Verarbeitungsschwindung aufweisen.

Sofern diese Zusammensetzung flammhemmend ausgerüstet sind, weisen sie gleichgute oder gegenüber den bekannten Zusammensetzungen verbesserte Flammschutzeigenschaften auf.

JP 06228425 beschreibt Blends aus Polycarbonat mit zwei verschiedenen Polyestern, wobei beide Polyester neben Terephthalsäure andere Dicarbonsäuren enthalten können. Die Kombination von Ethylenglykol als Alkoholkomponenten mit kleinen Mengen Isophthalsäure in der Säurekomponente wird jedoch nicht beschrieben.

JP 08012864 beschreibt schlagzähmodifizierte Blends aus Polycarbonat und Polyestern mit Oligophosphaten als Flammschutzmittel. Die Polyester können unter anderem Isophthalsäure enthalten, wobei jedoch genaue Anteile der Phthalsäuremonomere in den Zusammensetzungen nicht offenbart werden.

Aus der JP 05032800 sind Zusammensetzungen aus 50-90% eines Copolyesters mit 50-10% Polycarbonat sowie die daraus hergestellten Filme für Lebensmittelverpackungen bekannt. Der Copolyester kann verschiedene Dicarbonsäuren und oder Diole enthalten, während Schlagzähmodifikatoren-enthaltende Zusammensetzungen nicht beschrieben werden.

EP 594021 beschreibt schlagzähmodifizierte Blends aus Polycarbonat und Polyalkyleneterephthalat mit Oligophosphaten als Flammschutzmittel. Die Formmassen zeichnen sich durch gute Spannungsrissbeständigkeit, Kerbschlagzähigkeit und Wärmeformbeständigkeit bei guter Oberflächenbeschaffenheit aus.

WO 2002008329 offenbart flammwidrige Polycarbonatzusammensetzungen mit Oligophosphat, das einen geringen IPP (Isopropenylphenylphosphat)-Gehalt aufweist, und neben Vinylcopolymeren auch Polyalkylenterephthalate enthalten kann. Die Zusammensetzungen weisen verbesserte mechanische Eigenschaften, verbesserten Flammschutz, verbesserte Wärmenformbeständigkeit sowie verbesserte Langzeitstabilität auf.

Aufgabe der vorliegenden Erfindung ist die Bereitstellung von schlagzähmodifizierten Polyester/Polycarbonat-Zusammensetzungen mit einer optimalen Kombination aus hoher Reißdehnung, hoher multiaxialer Zähigkeit und geringer Verarbeitungsschwindung, sowie optional einem guten Flammschutzverhalten. Insbesondere sollten Zusammensetzungen bereitgestellt werden, die auch bei einem hohen Gehalt an Polyester (gleich oder mehr als 20 Gewichtsteile) noch gute Flammschutzeigenschaften aufweisen.

Es wurde nun überraschend gefunden, dass Formmassen bzw. Zusammensetzungen gemäß Anspruch enthaltend A) Polycarbonat, B) Polyester mit einem Gehalt an Isophthalsäurebausteinen, C) kautschukmodifiziertes Pfropfpolymerisat und D) optional einem Flammschutzmittel sowie weiterhin optional Vinyl(Co)Polymerisat (E) und weitere Additive (F) das gewünschte Eigenschaftsprofil aufweisen.

Insbesondere enthalten die Zusammensetzungen
A) 41 bis 80 Gew.-Teile, vorzugsweise 43 bis 75 Gew.-Teile, besonders bevorzugt 45 bis 73 Gew.-Teile (jeweils bezogen auf die Summe der Gewichtsteile der Komponenten A+B+C+D) aromatisches Polycarbonat,
B) 5 bis 40 Gew.-Teile, vorzugsweise 10 bis 35 Gew.-Teile, besonders bevorzugt 15 bis 30 Gew.-Teile, noch weiter bevorzugt 21 bis 30 Gew.-Teile (jeweils bezogen auf die Summe der Gewichtsteile der Komponenten A+B+C+D) Polyester mit einem Gehalt an Isophthalsäurebausteinen,
C) 1 bis 15 Gew.-Teile, bevorzugt 2 bis 11 Gew.-Teile, besonders bevorzugt 4 bis 9 Gew.-Teile (jeweils bezogen auf die Summe der Gewichtsteile der Komponenten A+B+C+D) kautschukmodifiziertes Pfropfpolymerisat,
D) 0 bis 25 Gew.-Teile, bevorzugt 5 bis 18 Gew.-Teile, besonders bevorzugt 7 bis 14 Gew.-Teile (jeweils bezogen auf die Summe der Gewichtsteile der Komponenten A+B+C+D) eines Flammschutzmittels,
E) 0 bis 20 Gew.-Teile, bevorzugt 0 bis 15 Gew.-Teile, weiter bevorzugt 0,1 bis 10 Gew.-Teile (bezogen auf die Summe der Gewichtsteile der Komponenten A+B+C+D = 100) Vinyl(Co)Polymerisat,
F) 0 bis 50 Gew.-Teile, bevorzugt 0,5 bis 25 Gew.-Teile (jeweils bezogen auf die Summe der Gewichtsteile der Komponenten A+B+C+D = 100) Zusatzstoffe,
wobei die Komponente B aus Ethylenglykolbausteinen und einer Mischung aus Terephthalsäurebausteinen und Isophthalsäurebausteinen mit einem Gehalt von 2,0 bis 4,0 Gew.-% bezogen auf Komponente B an Isophthalsäurebausteinen gebildet wird, und
wobei alle Gewichtsteilangaben in der vorliegenden Anmeldung so normiert sind, dass die Summe der Gewichtsteile der Komponenten A+B+C+D in der Zusammensetzung 100 ergeben, die oben genannte technische Aufgabe lösen.

Auch bei einem Gehalt an Komponente B) von bis zu 40 Gew.-Teilen (bezogen auf die Komponenten A-D) werden noch ausgezeichnete Flammschutzeigenschaften der Zusammensetzung erreicht.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 007 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 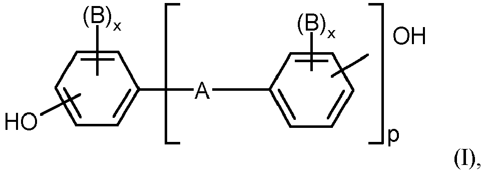 wobei
A eine Einfachbindung, C₁ bis C₅-Alkylen, C₂ bis C₅-Alkyliden, C₅ bis C₆-Cycloalkyliden,-O-, -SO-, -CO-, -S-, -SO₂-, C₆ bis C₁₂-Arylen, an das weitere aromatische gegebenenfalls Heteroatome enthaltende Ringe kondensiert sein können,
   oder ein Rest der Formel (II) oder (III) 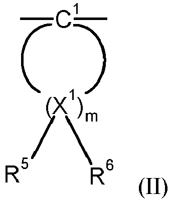 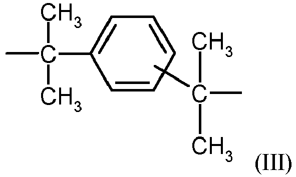
B jeweils C₁ bis C₁₂-Alkyl, vorzugsweise Methyl, Halogen, vorzugsweise Chlor und/oder Brom
x jeweils unabhängig voneinander 0, 1 oder 2,
p 1 oder 0 sind, und
R⁵ und R⁶ für jedes X¹ individuell wählbar, unabhängig voneinander Wasserstoff oder C₁ bis C₆-Alkyl, vorzugsweise Wasserstoff, Methyl oder Ethyl,
X¹ Kohlenstoff und
m eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxy-phenyl)-sulfoxide, Bis-(hydroxyphenyl)-ketone, Bis-(hydroxyphenyl)-sulfone und α,α,-Bis-(hydroxyphenyl)-diisopropyl-benzole sowie deren kernbromierte und/oder kernchlorierte Derivate. Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Gewichtsmittelmolekulargewichte (M_{w}, gemessen durch GPC (Gelpermeationschromatographie mit Polycarbonatstandard) von 10.000 bis 200.000 g/mol, vorzugsweise 15.000 bis 80.000 g/mol, besonders bevorzugt 24.000 bis 36.000 g/mol.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen. Bevorzugt werden lineare Polycarbonate, weiter bevorzugt auf Basis von Bisphenol-A, eingesetzt.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Bei der Herstellung von aromatischen Polyestercarbonaten kann zusätzlich eine oder mehrere aromatische Hydroxycarbonsäure eingesetzt werden.

Die aromatischen Polyestercarbonate können sowohl linear als auch in bekannter Weise verzweigt sein (siehe dazu DE-A 2 940 024 und DE-A 3 007 934), wobei lineare Polyestercabonate bevorzugt sind.

Als Verzweigungsmittel können beispielsweise drei- oder mehrfunktionelle Carbonsäurechloride, wie Trimesinsäuretrichlorid, Cyanursäuretrichlorid, 3,3',4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt werden; Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen Polycarbonate und Polyestercarbonate können allein oder im beliebigen Gemisch eingesetzt werden.

### Komponente B

Als Komponente B) enthalten die Zusammensetzungen erfindungsgemäß einen Polyester, wobei der Polyester aus Ethylenglykolbausteinen und einer Mischung aus Terephthalsäurebausteinen und Isophthalsäurebausteinen mit einem Gehalt von 2,0 bis 4,0 Gew.-% bezogen auf Komponente B an Isophthalsäurebausteinen gebildet wird.

Im folgenden sind Polyester und insbesondere Polyalkylenterephthalaten solche gemäß der vorliegenden Erfindung mit einem wie oben definierten Gehalt an Isophthalsäurebausteinen, sofern diese nicht explizit abweichend beschrieben werden.

Bevorzugte Polyalkylenterephthalate lassen sich aus Terephthalsäure und Isophthalsäure (oder ihren reaktionsfähigen Derivaten) und Ethylenglykol nach bekannten Methoden herstellen (Kunststoff-Handbuch, Bd. VIII, S. 695 FF, Karl-Hanser-Verlag, München 1973).

Die bevorzugten Polyalkylenterephthalate können neben Ethylenglykolresten bis zu 20 Mol.-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1.6, Cyclohexan-dimethanol-1,4, 3-Methylpentandiol-2,4, 2-Methylpentandiol-2,4, 2,2,4-Trimethylpentandiol-1,3 und -1,6,2-Ethylhexandiol-1,3 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-ß-hydroxyethoxyphenyl)-propan und 2,2-bis-(4-hydroxypropoxyphenyl)-propan (DE-A 24 07 674, 24 07 776, 27 15 932). Besonders bevorzugt ist Ethylenglycol.

Die Polyalkylenterephthalate können durch Einbau relativ kleiner Mengen 3- oder 4-wertiger Alkohole oder 3- oder 4-basischer Carbonsäure, wie sie z.B. in der DE-A 19 00 270 und der US-A 3 692 744 beschrieben sind, verzweigt werden. Beispiele für bevorzugte Verzweigungsmittel sind Trimesinsäure, Trimellitsäure, Trimethylolethan und -propan und Pentaerythrit.

Es ist ratsam, nicht mehr als 1 Mol.-% des Verzweigungsmittels, bezogen auf die Säurekomponente, zu verwenden.

Die Polyalkylenterephthalate besitzen im Allgemeinen eine intrinsische Viskosität von ca. 0,4 bis 1,5 dl/g, vorzugsweise 0,5 bis 1,3 dl/g, besonders bevorzugt von 0,6 - 1,1 dl/g, jeweils gemessen in Phenol/o-Dichlorbenzol (1:1 Gew.-Teile) bei 25°C.

In einer alternativen Ausführungsform können die erfindungsgemäß hergestellten Polyester auch im Gemisch mit anderen Polyestern und/oder weiteren Polymeren eingesetzt werden. Besonders bevorzugt werden Gemische von Polyalkylenterephthalaten mit anderen Polyestern eingesetzt.

In einer weiter bevorzugten Ausführungsform ist zumindest ein Teil der Komponente B) ein Polyester-Recyclat mit einem erfindungsgemäßen Anteil an Isophthalsäure-Bausteinen, wobei vorzugsweise die Komponente B) vollständig aus Recyclatmaterial besteht. Weiterhin können auch für die Komponenten A) und C) Recyclatmaterialien eingesetzt werden, wobei diese auch aus einem Blend, optional einem flammgeschütztem Blend (Komponente D)) stammen können. Recyclatmaterialien im Sinne der vorliegenden Erfindung sind Polyester, die zum Beispiel für die Herstellung von Flaschen verwendet werden und nach der Verwendung einem Rohstoffrecycling unterzogen werden. Dabei werden die Flaschen gesammelt, gereinigt und zerkleinert. Weitere optionale Aufarbeitungsschritte sind Trocknung und Extrusion zu Granulaten. Bevorzugt werden die Polyester zusätzlich einer Kondensationsreaktion zur Erhöhung des Molekulargewichts unterzogen.

### Komponente C

Die Komponente C umfasst ein oder mehrere Pfropfpolymerisate von
- C.1: 5 bis 95, vorzugsweise 30 bis 90 Gew.-%, wenigstens eines Vinylmonomeren auf
- C.2: 95 bis 5, vorzugsweise 70 bis 10 Gew.-% wenigstens einer Pfropfgrundlage ausgewählt aus der Gruppe bestehend aus Dienkautschuke, EP(D)M-Kautschuke (d.h. solche auf Basis Ethylen/Propylen und gegebenenfalls Dien), Acrylat-, Polyurethan-, Silikon-, Silikonacrylat-, Chloropren und Ethylen/Vinylcetat-Kautschuke.

Die Pfropfgrundlage C.2 hat im allgemeinen eine mittlere Teilchengröße (d₅₀-Wert) von 0,05 bis 10 µm, vorzugsweise 0,1 bis 5 µm, besonders bevorzugt 0,2 bis 0,4 µm.

Monomere C.1 sind vorzugsweise Gemische aus
- C.1.1: 50 bis 99 Gew.-Teilen Vinylaromaten und/oder kernsubstituierten Vinylaromaten (wie Styrol, α-Methylstyrol, p-Methylstyrol, p-Chlorstyrol) und/oder (Meth)Acrylsäure-(C₁-C₈)-Alkylester, wie Methylmethacrylat, Ethylmethacrylat), und
- C.1.2: 1 bis 50 Gew.-Teilen Vinylcyanide (ungesättigte Nitrile wie Acrylnitril und Methacrylnitril) und/oder (Meth)Acrylsäure-(C₁-C₈)-Alkylester, wie Methyl-methacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Monomere C.1.1 sind ausgewählt aus mindestens einem der Monomere Styrol, α-Methylstyrol und Methylmethacrylat, bevorzugte Monomere C.1.2 sind ausgewählt aus mindestens einem der Monomere Acrylnitril, Maleinsäureanhydrid und Methylmethacrylat. Besonders bevorzugte Monomere sind C.1.1 Styrol und C. 1.2 Acrylnitril.

Bevorzugte Pfropfgrundlagen C.2 sind Silikonacrylatkautschuke, Dienkautschuke (beispielsweise auf Basis Butadien und Isopren) oder Gemische von Dienkautschuken. Unter Dienkautschuke im erfindungsgemäßen Sinne sind auch Copolymerisate von Dienkautschuken oder deren Gemischen mit weiteren copolymerisierbaren Monomeren (z.B. gemäß C.1.1 und C.1.2) zu verstehen.

Die Pfropfgrundlagen C.2 weisen im allgemeinen eine Glasübergangstemperatur von < 10°C, vorzugsweise < 0°C, besonders bevorzugt < -10°C auf.

Besonders bevorzugte Polymerisate C sind beispielsweise ABS-Polymerisate (Emulsions-, Masse- und Suspensions-ABS), wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Der Gelanteil der Pfropfgrundlage C.2 beträgt vorzugsweise mindestens 20 Gew.-%, im Falle von im Emulsionspolymerisation hergestellten Pfropfgrundlagen C.2 vorzugsweise mindestens 40 Gew.-% (in Toluol gemessen).

Vorzugsweise weist das Pfropfpolymerisat aus den Komponenten C.1 und C.2 eine Kern-Schale-Struktur auf, wobei die Komponente C.1 die Schale bildet (auch als Hülle bezeichnet) und die Komponente C.2 den Kern ausbildet (siehe bspw. Ullmann's Encyclopedia of Industrial Chemistry, VCH-Verlag, Vol. A21, 1992, Seite 635 und Seite 656.

Die Pfropfcopolymerisate C werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die im Emulsionspolymerisationsverfahren durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß C.2 der Polymerisate C sind vorzugsweise Polymerisate aus Acrylsäurealkylestern, gegebenenfalls mit bis zu 40 Gew.-%, bezogen auf C.2 anderen polymerisierbaren, ethylenisch ungesättigten Monomeren. Zu den bevorzugten polymerisierbaren Acrylsäureestern gehören C₁ bis C₈-Alkylester, beispielsweise Methyl-, Ethyl-, Butyl-, n-Octyl- und 2-Ethylhexylester; Halogenalkylester, vorzugsweise Halogen-C₁-C₈-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage C.2. Bei cyclischen vernetzenden Monomeren mit mindestens drei ethylenisch ungesättigten Gruppen ist es vorteilhaft, die Menge auf unter 1 Gew.-% der Pfropfgrundlage C.2 zu beschränken.

Bevorzugte "andere" polymerisierbare, ethylenisch ungesättigte Monomere, die neben den Acrylsäureestern gegebenenfalls zur Herstellung der Pfropfgrundlage C.2 dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage C.2 sind Emulsionspolymerisate, die einen Gelgehalt von mindestens 60 Gew.-% aufweisen.

Geeignete Silikonkautschuke gemäß C.2. können durch Emulsionspolymerisation hergestellt werden, wie beispielsweise in US 2891920 und US 3294725 beschrieben. Weitere geeignete Pfropfgrundlagen gemäß C.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Als Pfropfgrundlagen C.2 sind erfindungsgemäß auch Silikonacrylat-Kautschuke geeignet. Diese Silikonacrylat-Kautschuke sind Komposit-Kautschuke mit pfropfaktiven Stellen enthaltend 10 - 90 Gew.-% Silikonkautschuk-Anteil und 90 bis 10 Gew.-% Polyalkyl(meth)acrylatkautschuk-Anteil, wobei sich die beiden genannten Kautschuk-Komponenten im Komposit-Kautschuk gegenseitig durchdringen, so dass sie sich nicht wesentlich voneinander trennen lassen. Wenn im Komposit-Kautschuk der Anteil der Silikonkautschuk-Komponente zu hoch ist, haben die fertigen Harzzusammensetzungen nachteilige Oberflächeneigenschaften und eine verschlechterte Einfärbbarkeit. Wenn dagegen der Anteil der Polyalkyl(meth)acrylatkautschuk-Komponente im Komposit-Kautschuk zu hoch ist, wird die Schlagzähigkeit der fertigen Harzzusammensetzung nachteilig beeinflusst).Silikonacrylat-Kautschuke sind bekannt und beispielsweise beschrieben in US 5,807,914, EP 430134 und US 4888388. Vorzugsweise eingesetzt wird ein in Emulsionspolymerisation hergestelltes Pfropfpolymer mit C.1 Methylmetacrylat und C.2 Silikonacrylat-Komposit-Kautschuk.

Der Gelgehalt der Pfropfgrundlage C.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

Die Glasübergangstemperatur wird mittels dynamischer Differenz-Thermoanalyse (DSC) gemäß der Norm DIN EN 61006 bei einer Heizrate von 10 K/min mit Definition der Tg als Mittelpunkttemperatur (Tangentenmethode) bestimmt.

### Komponente D

Die Erfindungsgemäßen Zusammensetzungen können weiterhin Flammschutzmittel enthalten, wobei diese vorzugsweise ausgewählt sind aus der Gruppe, die die phosphorhaltigen Flammschutzmittel und halogenierten Flammschutzmittel umfaßt.

Besonders bevorzugt werden phosphorhaltige Flammschutzmittel, wobei diese phosphorhaltigen Flammschutzmittel ausgewählt sind aus den Gruppen der Mono- und oligomeren Phosphor- und Phosphonsäureester, Phosphonatamine, Phosphazene und Phosphinsäuresalzen, wobei auch Mischungen von mehreren Komponenten ausgewählt aus einer oder verschiedenen dieser Gruppen als Flammschutzmittel zum Einsatz kommen können. Auch andere hier nicht speziell erwähnte halogenfreie Phosphorverbindungen können alleine oder in beliebiger Kombination mit anderen halogenfreien Phosphorverbindungen eingesetzt werden.

Bevorzugte Mono- und oligomere Phosphor- bzw. Phosphonsäureester sind Phosphorverbindungen der allgemeinen Formel (V) 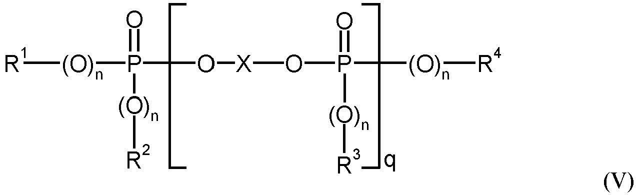 worin
R1, R2, R3 und R4, unabhängig voneinander jeweils gegebenenfalls halogeniertes C1 bis C8-Alkyl, jeweils gegebenenfalls durch Alkyl, vorzugsweise C1 bis C4-Alkyl, und/oder Halogen, vorzugsweise Chlor, Brom, substituiertes C5 bis C6-Cycloalkyl, C6 bis C20-Aryl oder C7 bis C 12-Aralkyl,
n unabhängig voneinander, 0 oder 1,
q 0 bis 30 und
X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu acht Etherbindungen enthalten kann, bedeuten.

Bevorzugt stehen R1, R2, R3 und R4 unabhängig voneinander für C1 bis C4-Alkyl, Phenyl, Naphthyl oder Phenyl-C1-C4-alkyl. Die aromatischen Gruppen R1, R2, R3 und R4 können ihrerseits mit Halogen- und/oder Alkylgruppen, vorzugsweise Chlor, Brom und/oder C1 bis C4-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.
X in der Formel (V) bedeutet bevorzugt einen ein- oder mehrkernigen aromatischen Rest mit 6 bis 30 C-Atomen. Dieser leitet sich bevorzugt von Diphenolen der Formel (I) ab.
n in der Formel (V) kann, unabhängig voneinander, 0 oder 1 sein, vorzugsweise ist n gleich 1.
q steht für ganzzahlige Werte von 0 bis 30, bevorzugt 0 bis 20, besonders bevorzugt 0 bis 10, im Falle von Mischungen für Durchschnittswerte von 0,8 bis 5,0, bevorzugt 1,0 bis 3,0, weiter bevorzugt 1,05 bis 2,00, und besonders bevorzugt von 1,08 bis 1,60.
X steht besonders bevorzugt für 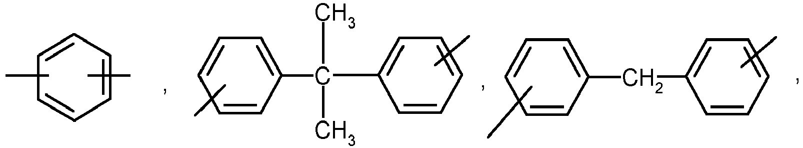 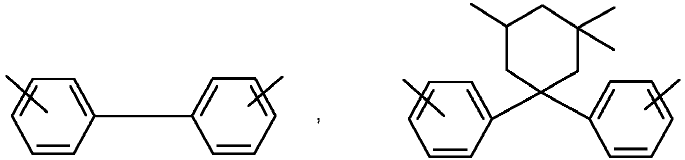
oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Phosphorverbindungen der Formel (V) sind insbesondere Tributylphosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, Resorcin verbrücktes Oligophosphat und Bisphenol A verbrücktes Oligophosphat. Der Einsatz von oligomeren Phosphorsäureestern der Formel (V), die sich vom Bisphenol A ableiten, ist insbesondere bevorzugt.

Höchst bevorzugt als Komponente D ist Bisphenol-A basierendes Oligophosphat gemäß Formel (Va)

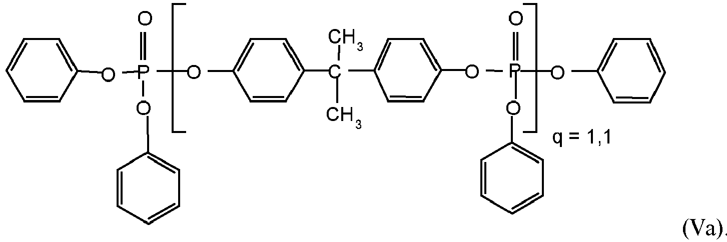

In einer alternativen bevorzugten Ausführungsform ist Komponente D Resorcinol-basierendes Oligophosphat gemäß Formel (Vb)

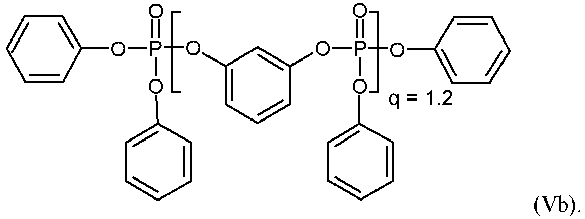

Die Phosphorverbindungen gemäß Komponente D sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Als erfindungsgemäße Komponente D können auch Mischungen von Phosphaten mit unterschiedlicher chemischer Struktur und/oder mit gleicher chemischer Struktur und verschiedenem Molekulargewicht eingesetzt werden.

Vorzugsweise werden Mischungen mit gleicher Struktur und unterschiedlicher Kettenlänge verwendet, wobei es sich bei dem angegebenen q-Wert um den mittleren q-Wert handelt. Der mittlere q-Wert kann bestimmt werden, indem mittels geeigneter Methode (Gaschromatographie (GC), High Pressure Liquid Chromatography (HPLC), Gelpermeationschromatographie (GPC)) die Zusammensetzung der Phosphorverbindung (Molekulargewichtsverteilung) bestimmt wird und daraus die Mittelwerte für q berechnet werden.

Weiterhin können Phosphonatamine und Phosphazene, wie sie in WO 00/00541 und WO 01/18105 beschrieben sind, als Flammschutzmittel eingesetzt werden.

Die Flammschutzmittel können allein oder in beliebiger Mischung untereinander oder in Mischung mit anderen Flammschutzmitteln eingesetzt werden.

Weitere bevorzugte Flammschutzmittel im erfindungsgemäßen Sinne sind Salze einer Phosphinsäure mit beliebigen Metallkationen. Es können auch Mischungen von Salzen eingesetzt werden, die sich in Ihrem Metallkation unterscheiden. Bei den Metallkationen handelt es sich um die Kationen Metalle der 1. Hauptgruppe (Alkalimetalle, vorzugsweise Li⁺, Na⁺, K⁺), der 2. Hauptgruppe (Erdalkalimetalle; vorzugsweise Mg²⁺, Ca²⁺, Sr²⁺, Ba²⁺, besonders bevorzugt Ca²⁺) oder der 3. Hauptgruppe (Elemente der Borgruppe; vorzugsweise Al³⁺) und/oder der 2., 7. oder 8. Nebengruppe (vorzugsweise Zn²⁺, Mn²⁺, Fe²⁺, Fe³⁺) des Periodensystems ist.

Vorzugsweise wird ein Salz oder eine Mischung von Salzen einer Phosphinsäure der Formel (IV) eingesetzt, 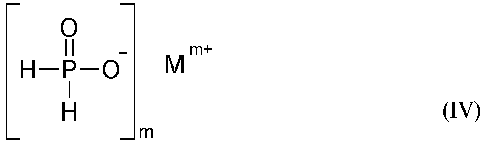 worin M^{m+} ein Metallkation der 1. Hauptgruppe (Alkalimetalle; m = 1), 2. Hauptgruppe (Erdalkalimetalle; m = 2) oder der 3. Hauptgruppe (m = 3) oder der 2., 7. oder 8. Nebengruppe (wobei m eine ganze Zahl von 1 bis 6, bevorzugt 1 bis 3 und besonders bevorzugt 2 oder 3 bedeutet) des Periodensystems ist.

Besonders bevorzugt sind in Formel (IV)
für m = 1 die Metallkationen M⁺ = Li⁺, Na⁺, K⁺,
für m = 2 die Metallkationen M²⁺ = Mg²⁺, Ca²⁺,Sr²⁺, Ba²⁺ und
für m = 3 die Metallkationen M³⁺ = Al³⁺,
höchst bevorzugt sind Ca²⁺ (m = 2) und Al³⁺ (m = 3).

In einer bevorzugten Ausführungsform ist die mittlere Teilchengröße d₅₀ des Phosphinsäuresalzes (Komponente D) kleiner als 80 µm, vorzugsweise kleiner als 60 µm, besonders bevorzugt ist d₅₀ zwischen 10 µm und 55 µm. Die mittlere Teilchengröße d₅₀ ist der Durchmesser, oberhalb und unterhalb dessen jeweils 50 Gew.-% der Teilchen liegen. Es können auch Mischungen von Salzen eingesetzt werden, die sich in ihrer mittleren Teilchengröße d₅₀ unterscheiden.

Diese Anforderungen an die Teilchengröße sind jeweils mit dem technischen Effekt verbunden, dass die Flammschutzeffizienz des Phosphinsäuresalzes erhöht ist.

Das Phosphinsäuresalz kann entweder alleine oder in Kombination mit anderen phosphorhaltigen Flammschutzmitteln eingesetzt werden.

Wenn die erfindungsgemäßen Zusammensetzungen flammhemmend ausgestattet sind, ist vorzugsweise zusätzlich ein Antidrippingmittel, vorzugsweise Polytetrafluorethylen (PTFE), enthalten. Der Anteil an PTFE in der Gesamtzusammensetzung beträgt vorzugsweise von 0,05 Gew.-Teilen bis 1,50 Gew.-Teilen, weiter bevorzugt von 0,1 Gew.-Teilen bis 1,0 Gew.Teilen, und besonders bevorzugt von 0,2 Gew.-Teilen bis 0,6 Gew.-Teilen.

### Komponente E

Die Komponente E umfasst ein oder mehrere thermoplastische Vinyl(Co)Polymerisate E.1.

Geeignet sind als Vinyl(Co)Polymerisate E.1 Polymerisate von mindestens einem Monomeren aus der Gruppe der Vinylaromaten, Vinylcyanide (ungesättigte Nitrile), (Meth)Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
- E.1.1: 50 bis 99, vorzugsweise 60 bis 80 Gew.-Teilen Vinylaromaten und/oder kernsubstituierten Vinylaromaten wie Styrol, α-Methylstyrol, p-Methylstyrol, p-Chlorstyrol) und/oder (Meth)Acrylsäure-(C₁-C₈)-Alkylester, wie Methylmethacrylat, Ethylmethacrylat), und
- E.1.2: 1 bis 50, vorzugsweise 20 bis 40 Gew.-Teilen Vinylcyanide (ungesättigte Nitrile) wie Acryl-nitril und Methacrylnitril und/oder (Meth)Acryl-säure-(C₁-C₈)-Alkylester, wie Methylmeth-acrylat, n-Butylacrylat, t-Butylacrylat, und/oder ungesättigte Carbonsäuren, wie Maleinsäure, und/oder Derivate, wie Anhydride und Imide, ungesättigter Carbonsäuren, beispielsweise Maleinsäureanhydrid und N-Phenylmaleinimid).

Die Vinyl(co)polymerisate E.1 sind harzartig, thermoplastisch und kautschukfrei. Besonders bevorzugt ist das Copolymerisat aus E.1.1 Styrol und D. 1.2 Acrylnitril.

Die (Co)Polymerisate gemäß E.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte Mw (Gewichtsmittel, ermittelt durch Lichtstreuung oder Sedimentation) zwischen 15.000 und 200.000.

### Komponente F

Die Zusammensetzung kann weitere handelsübliche Zusatzstoffe gemäß Komponente F) wie Flammschutzsynergisten, Antidrippingmittel (beispielsweise Verbindungen der Substanzklassen der fluorierten Polyolefine, der Silikone sowie Aramidfasern), Gleit- und Entformungsmittel (beispielsweise Pentaerythrittetrastearat), Nukleiermittel, Stabilisatoren, Antistatika (beispielsweise Leitruße, Carbonfasern, Carbon Nanotubes sowie organische Antistatika wie Polyalkylenether, Alkyl-Sulfonate oder Polyamid-haltige Polymere), Säuren, Füll- und Verstärkungsstoffe (beispielsweise Glas- oder Karbonfasern, Glimmer, Kaolin, Talk, CaCO₃ und Glasschuppen) sowie Farbstoffe und Pigmente - ausgenommen Leitruße, Carbonfasern, Carbon Nanotubes - enthalten. Die fluorierten Polyolefine werden vorzugsweise in Form einer koagulierten Mischung von Emulsionen fluorierter Polyolefine mit Emulsionen eines Vinyl(Co)Polymerisats E.1, besonders bevorzugt mit Emulsionen eines Copolymerisats auf Styrol-Acrylnitril-Basis eingesetzt Vorzugsweise werden der Zusammensetzung Umesterungsstabilisatoren zugesetzt. Insbesondere kommen hierbei Stabilisatoren auf Phosphitbasis zum Einsatz, wobei oligomere Phosphite weiter bevorzugt sind. Besonders bevorzugt sind Phosphitstabilisatoren, wie sie in WO 2004/007607 beschrieben werden.

### Herstellung der Formmassen und Formkörper

Die erfindungsgemäßen thermoplastischen Formmassen werden hergestellt, indem man die jeweiligen Bestandteile in bekannter Weise vermischt und bei Temperaturen von 240°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung sind ebenfalls Verfahren zur Herstellung der Formmassen und die Verwendung der Formmassen zur Herstellung von Formkörpern sowie die Formteile selbst.

Die erfindungsgemäßen Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Fernsehgeräte, Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen sowie Karosserie- bzw. Innenbauteile für Nutzfahrzeuge, insbesondere für den Automobilbereich.

Insbesondere können die erfindungsgemäßen Formmassen beispielsweise auch zur Herstellung von folgenden Formkörpern oder Formteilen verwendet werden: Innenausbauteile für Schienenfahrzeuge, Schiffe, Flugzeuge, Busse und andere Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen und für Fernsehgeräte, wärmeisolierte Transportbehältnisse, Formteile für Sanitär- und Badausrüstungen, Abdeckgitter für Lüfteröffnungen und Gehäuse für Gartengeräte.

Die folgenden Beispiele dienen der weiteren Erläuterung der Erfindung.

### Beispiele

### Komponente A:

Lineares Polycarbonat auf Basis Bisphenol A mit einer relativen Lösungsviskosität von ηᵣₑₗ = 1,306 ± 0,05 gemessen in CH₂Cl₂ als Lösungsmittel bei 25°C und einer Konzentration von 0,5 g/100 ml, was einem gewichtsgemittelten Molekulargewicht (M_{w}) von ca. 30.000 entspricht (gemessen durch Gelpermeationschromatographie mit Polycarbonat-Standard in DCM).

### Komponente B1:

Lineares Polyethylenterephthalat mit einer intrinsischen Viskosität von 0.95 gemessen in Phenol/o-Dichlorbenzol (1:1 Gew.-Teile) bei 25°C und einem Gehalt an Isophthalsäurebausteinen von 2 Gew.-%.

### Komponente B2:

Lineares Polyethylenterephthalat mit einer intrinsischen Viskosität von 0.95 gemessen in Phenol/o-Dichlorbenzol (1:1 Gew.-Teile) bei 25°C und einem Gehalt an Isophthalsäurebausteinen von 0%.

### Komponente C:

ABS-Polymerisat, hergestellt durch Emulsions-Polymerisation von 43 Gew.-% (bezogen auf das ABS-Polymerisat) einer Mischung aus 27 Gew.-% Acrylnitril und 73 Gew.-% Styrol in Gegenwart von 57 Gew.-% (bezogen auf das ABS-Polymerisat) eines teilchenförmig vernetzten Polybutadienkautschuks (mittlerer Teilchendurchmesser d₅₀ = 0,35 µm).

### Komponente D:

### Bisphenol-A-basierendes Oligophosphat

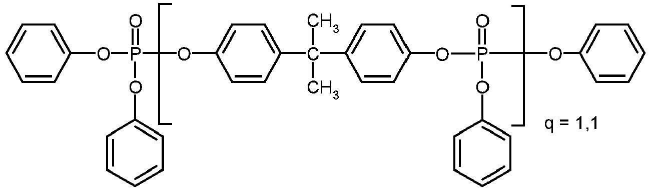

### Komponente F1:

### Irganox® B900:

Gemisch aus 80 Gew.-% Irgafos® 168 (Tris-(2,4-di-tert.-butyl)phenyl-phosphit) und 20 Gew.-% Irganox® 1076 (Octadecyl-3-(3,5-di-tert-butyl-4-hydroxyphenyl)propionat) (BASF, Deutschland)

### Komponente F2:

### Oligomerer Phosphitstabilisator mit der Struktureinheit

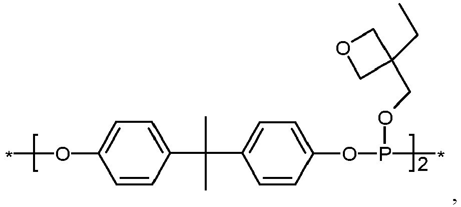

und einem Gewichtsmittel Mw=1150 g/mol in Polybutylenterephthalatmatrix (15 Gew.% Stabilisator).

### Komponente F3:

### Entformungsmittel Pentaerythrittetrastearat

### Komponente F4:

### Polytetrafluorethylen-Pulver, CFP 6000 N, Fa. Du Pont.

### Herstellung und Prüfunh der Formmassen

Auf einem Zweischneckenextruder (ZSK-25) (Fa. Werner und Pfleiderer) werden die in Tabelle 1 aufgeführten Einsatzstoffe bei einer Drehzahl von 225 Upm und einem Durchsatz von 15 kg/h bei einer Maschinentemperatur von 240°C compoundiert und granuliert.

Die fertigen Granulate werden auf einer Spritzgussmaschine zu den entsprechenden Probekörpern verarbeitet (Massetemperatur 270°C, Werkzeugtemperatur 70°C, Fließfrontgeschwindigkeit 40 mm/s).

Die Reißdehnung wird in einem Zugversuch gemäß ISO 527-1,-2 mit einer Dehnrate von 50mm/s gemessen.

Die Verarbeitungs-Schwindung wird in Anlehnung an ISO 2577 an Platten der Abmessung 150 x 105 x 3 mm bestimmt.

Als Maß für die Tieftemperaturduktilität im praxisrelevanten Schlag-/Crashversuch dient das Verhalten im multiaxialen Durchstoßversuch. Der Durchstoßversuch wird in Anlehnung an ISO 6603-2 bei einer Temperatur von -30°C an Prüfkörpern der Abmessung 60 mm x 60 mm x 2 mm durchgeführt. Dabei wird zum einen die maximale Energieaufnahme bestimmt, zum anderen werden insbesondere die Bruchbilder von zehn Prüfkörpern dahingehend beurteilt, bei welchem Anteil ein sprödes, d.h. splitterndes Versagen auftritt.

Das Brandverhalten wird nach UL 94V an Stäben der Abmessung 127 x 12,7 x 1,5 mm gemessen.

**Tabelle 1: Zusammensetzungen und ihre Eigenschaften**

| | **Bsp. 1** | **Vgl.1** | **Bsp. 2** | **Vgl. 2** | **Bsp. 3** | **Vgl. 3** |
|---|---|---|---|---|---|---|
| A | 47,8 | 47,8 | 62,8 | 62,8 | 71,2 | 71,2 |
| B1 | 30 | | 15 | | 20 | |
| B2 | | 30 | | 15 | | 20 |
| C | 7 | 7 | 7 | 7 | 7 | 7 |
| D | 13 | 13 | 13 | 13 | | |
| F1 | 0,1 | 0,1 | 0,1 | 0,1 | 0,1 | 0,1 |
| F2 | 1,3 | 1,3 | 1,3 | 1,3 | 1,3 | 1,3 |
| F3 | 0,4 | 0,4 | 0,4 | 0,4 | | |
| F4 | 0,4 | 0,4 | 0,4 | 0,4 | 0,4 | 0,4 |
| Reißdehnung [%] | 66 | 51 | 57 | 42 | 124 | 122 |
| Verarbeitungs-Schwindung quer [%] | 0,48 | 0,53 | 0,49 | 0,49 | 0,62 | 0,64 |
| Energieaufnahme im Plattendurchstoß (-30°C) [J] | 48 | 43 | 45 | 41 | 57 | 58 |
| Anteil Durchstoßplatten mit sprödem Bruchverhalten (-30°C) [%] | 10 | 100 | 10 | 90 | 0 | 0 |
| Gesamtnachbrennzeit UL 94V (1,5 mm) [s] | 22 | 32 | 22 | 21 | n.g.* | n.g.* |
| UL 94V (1,5 mm) [Klasse] | V0 | V2 | V0 | V0 | n.g.* | n.g.* |

| | | | | | | |
|---|---|---|---|---|---|---|
| *nicht gemessen | | | | | | |

Aus Tabelle 1 ist ersichtlich, dass nur die erfindungsgemäßen Zusammensetzungen in den Beispielen 1-3 mit einer Kombination aus Polycarbonat, Polyalkylenterephthalat mit Isophthalsäurebausteinen, Schlagzähmodifikator und optional Flammschutzmitteln die erfindungsgemäße Aufgabe lösen, d.h. eine Kombination aus hoher Reißdehung, geringer Verarbeitungsschwindung, guter multiaxialer Zähigkeit und einer gegegebenenfalls guten Performance im UL94V-Test ergeben.

## Patentansprüche

1. Zusammensetzung enthaltend
A) 41 bis 80 Gew.-Teile, jeweils bezogen auf die Summe der Gewichststeile der Komponenten A+B+C+D, aromatisches Polycarbonat,
B) 5 bis 40 Gew.-Teile, jeweils bezogen auf die Summe der Gewichtsteile der Komponenten A+B+C+D, Polyester
C) 1 bis 15 Gew.-Teile, jeweils bezogen auf die Summe der Gewichtsteile der Komponenten A+B+C+D, kautschukmodifiziertes Pfropfpolymerisat,
D) 0 bis 25 Gew.-Teile, jeweils bezogen auf die Summe der Gewichtsteile der Komponenten A+B+C+D, eines Flammschutzmittels,
E) 0 bis 20 Gew.-Teile, jeweils bezogen auf die Summe der Gewichtsteile der Komponenten A+B+C+D = 100, Vinyl(Co)Polymerisat,
F) 0 bis 50 Gew.-Teile, jeweils bezogen auf die Summe der Gewichtsteile der Komponenten A+B+C+D = 100, Zusatzstoffe,
wobei die Komponente B aus Ethylenglykolbausteinen und einer Mischung aus Terephthalsäurebausteinen und Isophthalsäurebausteinen mit einem Gehalt von 2,0 bis 4,0 Gew.-% bezogen auf Komponente B an Isophthalsäurebausteinen gebildet wird,
und wobei alle Gewichtsteilangaben so normiert sind, dass die Summe der Gewichtsteile der Komponenten A+B+C+D in der Zusammensetzung 100 ergeben.

2. Zusammensetzung gemäß Anspruch 1, enthaltend 21 bis 30 Gew.-Teile (jeweils bezogen auf die Summe der Gewichtsteile der Komponenten A+B+C+D) Polyester gemäß Komponente B).

3. Zusammensetzung gemäß Anspruch 1, **dadurch gekennzeichnet, dass** Komponente B) ein Recyclatmaterial ist.

4. Zusammensetzung gemäß Anspruch 1, **dadurch gekennzeichnet, dass** das Flammschutzmittel der Komponente D) ein phosphorhaltiges Flammschutzmittel ist, ausgewählt aus der Gruppe, die die Mono- und oligomeren Phosphor- und Phosphonsäureester, Phosphonatamine, Phosphazene und Phosphinsäuresalze umfaßt.

5. Zusammensetzung gemäß Anspruch 1, **dadurch gekennzeichnet, dass** das Flammschutzmittel ein Oligophosphat ist.

6. Zusammensetzung gemäß Anspruch 1, **dadurch gekennzeichnet, dass** das Flammschutzmittel ein Salz oder eine Mischung von Salzen einer Phosphinsäure ist, wobei das Metallkation Li⁺, Na⁺, K⁺, Mg²⁺, Ca²⁺, Sr²⁺, Ba²⁺, Al³⁺, Zn²⁺, Mn²⁺, Fe²⁺ und/oder Fe³⁺ ist

7. Zusammensetzung gemäß Anspruch 4, wobei ein Salz oder eine Mischung von Salzen einer Phosphinsäure der Formel (IV) eingesetzt wird, 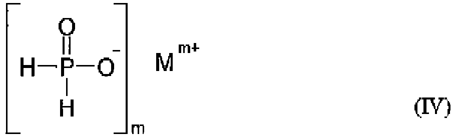 worin
M^{m+} ein Metallkation der 1. Hauptgruppe (Alkalimetalle; m = 1), 2. Hauptgruppe (Erdalkalimetalle; m = 2) oder der 3. Hauptgruppe (m = 3) oder der 2., 7. oder 8. Nebengruppe (wobei m eine ganze Zahl von 1 bis 6, bedeutet) des Periodensystems ist.

8. Zusammensetzung gemäß einem der Ansprüche 1 bis 7, wobei die handelsüblichen Zusatzstoffe gemäß Komponente F) Flammschutzsynergisten, Antidrippingmittel, Gleit- und Entformungsmittel, Nukleiermittel, Stabilisatoren, Antistatika, Säuren, Füll- und Verstärkungsstoffe sowie Farbstoffe und Pigmente sind.

9. Verwendung der Zusammensetzungen gemäß Anspruch 1 bis 8 zur Herstellung von Formkörpern

10. Formkörpern, enthaltend eine Zusammensetzung nach Anspruch 1.

## Claims

1. Composition comprising
A) from 41 to 80 parts by weight, based in each case on the total of the parts by weight of components A+B+C+D, of aromatic polycarbonate,
B) from 5 to 40 parts by weight, based in each case on the total of the parts by weight of components A+B+C+D, of polyester,
C) from 1 to 15 parts by weight, based in each case on the total of the parts by weight of components A+B+C+D, of rubber-modified graft polymer,
D) from 0 to 25 parts by weight, based in each case on the total of the parts by weight of components A+B+C+D, of a flame retardant,
E) from 0 to 20 parts by weight, based in each case on the total of the parts by weight of components A+B+C+D = 100, of vinyl (co)polymer,
F) from 0 to 50 parts by weight, based in each case on the total of the parts by weight of components A+B+C+D = 100, of additives,
where component B is formed from ethylene glycol units and from a mixture of terephthalic acid units and isophthalic acid units with from 2.0 to 4.0% by weight content, based on component B, of isophthalic acid units,
and where all of the parts by weight data have been standardized in such a way that the total of the parts by weight of components A+B+C+D in the composition is 100.

2. Composition according to Claim 1, comprising from 21 to 30 parts by weight (based in each case on the total of the parts by weight of components A+B+C+D) of polyester according to component B).

3. Composition according to Claim 1, **characterized in that** component B) is a recyclate material.

4. Composition according to Claim 1, **characterized in that** the flame retardant of component D) is a phosphorus-containing flame retardant selected from the group comprising the monomeric and oligomeric phosphoric and phosphonic esters, phosphonate amines, phosphazenes and phosphinic salts.

5. Composition according to Claim 1, **characterized in that** the flame retardant is an oligophosphate.

6. Composition according to Claim 1, **characterized in that** the flame retardant is a salt or a mixture of salts of a phosphinic acid, where the metal cation is Li⁺, Na⁺, K⁺, Mg²⁺, Ca²⁺, Sr²⁺, Ba²⁺, Al³⁺, Zn²⁺, Mn²⁺, Fe²⁺ and/or Fe³⁺.

7. Composition according to Claim 4, where a salt or a mixture of salts of a phosphinic acid of the formula (IV) is used, 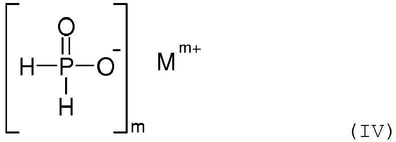 in which
M^{m+} is a metal cation of the 1st main group (alkali metals; m = 1), 2nd main group (alkaline earth metals; m = 2) or 3rd main group (m = 3) or of the 2nd, 7th or 8th transition group (where m is an integer from 1 to 6) of the periodic table of the elements.

8. Composition according to any of Claims 1 to 7, where the commercially available additives according to component F) are flame retardant synergists, antidripping agents, lubricants and mould-release agents, nucleating agents, stabilizers, antistatic agents, acids, fillers and reinforcing materials, and also dyes and pigments.

9. Use of the compositions according to any of Claims 1 to 8 for the production of mouldings.

10. Moulding comprising a composition according to Claim 1.

## Revendications

1. Composition contenant
A) 41 à 80 parties en poids, à chaque fois par rapport à la somme des parties en poids des composants A + B + C + D, de polycarbonate aromatique,
B) 5 à 40 parties en poids, à chaque fois par rapport à la somme des parties en poids des composants A + B + C + D, de polyester,
C) 1 à 15 parties en poids, à chaque fois par rapport à la somme des parties en poids des composants A + B + C + D, de polymère greffé modifié par du caoutchouc,
D) 0 à 25 parties en poids, à chaque fois par rapport à la somme des parties en poids des composants A + B + C + D, d'un agent ignifuge,
E) 0 à 20 parties en poids, à chaque fois par rapport à la somme des parties en poids des composants A + B + C + D = 100, de (co)polymère de vinyle,
F) 0 à 50 parties en poids, à chaque fois par rapport à la somme des parties en poids des composants A + B + C + D = 100, d'additifs,
le composant B étant formé à partir d'éléments d'éthylèneglycol et d'un mélange d'éléments d'acide téréphtalique et d'éléments d'acide isophtalique, présentant une teneur de 2,0 à 4,0% en poids, par rapport au composant B, en éléments d'acide isophtalique, toutes les indications de parties en poids étant normalisées de manière telle que la somme des parties en poids des composants A + B + C + D dans la composition vaut 100.

2. Composition selon la revendication 1, contenant 21 à 30 parties en poids (à chaque fois par rapport à la somme des parties en poids des composants A + B + C + D) de polyester selon le composant B).

3. Composition selon la revendication 1, **caractérisée en ce que** le composant B) est un matériau recyclé.

4. Composition selon la revendication 1, **caractérisée en ce que** l'agent ignifuge du composant D) est un agent ignifuge contenant du phosphore, choisi dans le groupe qui comprend les esters monomères et oligomères de l'acide phosphorique et phosphonique, les phosphonate-amines, les phosphazènes et les sels de l'acide phosphinique.

5. Composition selon la revendication 1, **caractérisée en ce que** l'agent ignifuge est un oligophosphate.

6. Composition selon la revendication 1, **caractérisée en ce que** l'agent ignifuge est un sel ou un mélange de sels d'un acide phosphinique, le cation métallique étant Li⁺, Na⁺, K⁺, Mg²⁺, Ca²⁺, Sr²⁺, Ba²⁺, Al³⁺, Zn²⁺, Mn²⁺, Fe²⁺ et/ou Fe³⁺.

7. Composition selon la revendication 4, un sel ou un mélange de sels d'un acide phosphinique de formule (IV) étant utilisé, 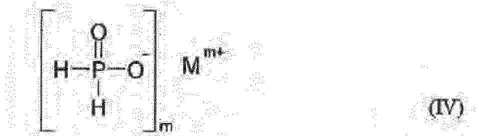 dans laquelle
M^{m+} représente un cation métallique du 1er groupe principal (métaux alcalins : m = 1), du 2ème groupe principal (métaux alcalino-terreux : m = 2) ou du 3ème groupe principal (m = 3) ou du 2ème, 7ème ou 8ème groupe secondaire (m signifiant un nombre entier de 1 à 6) du système périodique.

8. Composition selon l'une quelconque des revendications 1 à 7, les additifs usuels du commerce selon le composant F) étant des synergistes ignifuges, des agents anti-goutte, des lubrifiants et des agents de démoulage, des agents de nucléation, des stabilisants, des antistatiques, des acides, des charges et des substances de renforcement ainsi que des colorants et des pigments.

9. Utilisation des compositions selon la revendication 1 à 8 pour la production de corps moulés.

10. Corps moulés, contenant une composition selon la revendication 1.
